# EUROPÄISCHE PATENTSCHRIFT

(11) **EP 1 062 834 B1**
(45) Veröffentlichungstag und Bekanntmachung des Hinweises auf die Patenterteilung: **05.06.2002**
(21) Anmeldenummer: 99915510.4
(22) Anmeldetag: 08.03.1999
(51) Int. Cl.: H04Q 11/04

(54) **VERFAHREN ZUM ENTFERNEN VON ATM-ZELLEN AUS EINER ATM-KOMMUNIKATIONSEINRICHTUNG**
METHOD FOR REMOVING ATM CELLS FROM AN ATM COMMUNICATIONS DEVICE
PROCEDE DESTINE A SUPPRIMER DES CELLULES ATM D'UN DISPOSITIF DE COMMUNICATION ATM

(30) Priorität: 09.03.1998 DE 19810058
(43) Veröffentlichungstag der Anmeldung: 27.12.2000
(73) Patentinhaber: SIEMENS AKTIENGESELLSCHAFT, 80333 München (DE)
(72) Erfinder: HEISS, Herbert, D-82008 Unterhaching (DE); THUDT, Raimar, D-80995 München (DE)
(86) Internationale Anmeldenummer: DE9900613
(87) Internationale Veröffentlichungsnummer: WO9946952

(56) Entgegenhaltungen:
- EP-A- 0 596 200
- HONGQING LI ET AL: "PERFORMANCE OF TCP OVER UBR SERVICE IN ATM NETWORKS WITH PER-VC EARLY PACKET DISCARD SCHEMES" PROCEEDINGS OF THE 1996 IEEE FIFTEENTH ANNUAL INTERNATIONAL PHOENIX CONFERENCE ON COMPUTERS AND COMMUNICATIONS, SCOTTSDALE, MAR. 27 - 29, 1996, Nr. CONF. 15, 27. März 1996 (1996-03-27), Seiten 350-357, XP000594803 INSTITUTE OF ELECTRICAL AND ELECTRONICS ENGINEERSISBN: 0-7803-3256-3

## Beschreibung

Die Erfindung betrifft ein Verfahren zum Entfernen von ATM-Zellen aus einer ATM-Kommunikationseinrichtung, in der ATM-Zellen jeweils zu mehreren einem gemeinsamen Rahmen zugeordnet sind.

Bei einem herkömmlichen Paket-Kommunikationssystem hat ein Paket eine vergleichsweise große und variable Länge. Ein System zur Übertragung von Informationen in Paketen mit festen, vorgegebenen Längen wird als ATM (Asynchronous Transfer Mode)-System bezeichnet. Mit einem solchen System lassen sich Sprach-, Video- und Datensignale auf die gleiche Weise verarbeiten und übertragen. Die einzelnen Pakete werden üblicherweise Zellen genannt. In den Zellen ist jeweils ein Zellenkopf enthalten, dessen Information eine Vermittlung bzw. Zuordnung der jeweiligen Zelle ermöglicht. In ATM-Kommunikationseinrichtungen, insbesondere Kommunikationsnetzeinrichtungen, ist eine Hochgeschwindigkeits- und Breitband-Übertragung mit einer Übertragungsrate von mehr als 150 Mb/s möglich.

Die ATM-Zellen haben insbesondere eine Länge von 53 Byte für ein Breitband-ISDN (Integrated Services Digital Network). Für weitere Details zu dem Aufbau von ATM-Zellen sei beispielsweise auf M. DePrycker: "Asynchronous Transfer Mode", 2nd ed., London, Horwood, 1993, verwiesen.

Ein Problem bei ATM-Kommunikationseinrichtungen ist die Höhe der Übertragungsrate auf einer Übertragungsstrecke der Einrichtung, wenn sich dort ein Stau von ATM-Zellen gebildet hat. Das Problem wird ausführlicher im IEEE Journal on Selected Areas in Communications, Vol.13, No.4, Mai 1995, Seiten 633 bis 641: "Dynamics of TCP Traffic over ATM Networks" von Allyn Romanow und Sally Floyd (im folgenden IEEE 95 genannt) beschrieben. Der Artikel befaßt sich mit ATM-Systemen, in denen ATM-Zellen jeweils zu mehreren einem gemeinsamen Rahmen zugeordnet sind. Wenn beispielsweise eine Zelle eines solchen Rahmens verloren gegangen oder beschädigt worden ist, ist es unerwünscht, daß die weiteren Zellen desselben Rahmens über eine Übertragungsstrecke einer ATM-Einrichtung übertragen werden, da nicht mehr die vollständige Information des Rahmens am Ende der Übertragungsstrecke ankommen würde. Das ATM-System wäre unnötigerweise belastet. Insbesondere bei einem Stau auf der Übertragungsstrecke kommt es daher darauf an, die weiteren Zellen des Rahmens möglichst schnell und effektiv zu entfernen.

In IEEE Network Mag., Vol.7, No.5, Seiten 26 bis 34, September 1993: "Packet Reassembly during Cell Loss" von G. Armitage und K. Adams (im folgenden IEEE 93 genannt) wird daher vorgeschlagen, ATM-Zellen eines bestimmten Rahmens, jeweils beim Eintreffen einer einzelnen ATM-Zelle am Ende einer Warteschlange zu entfernen. Solche Warteschlangen dienen insbesondere der Verwaltung einer Reihenfolge von ATM-Zellen am Ende und/oder am Anfang einer Übertragungsstrecke. Gemäß dem in IEEE 93 beschriebenen Verfahren, das als Partial Packet Discard (im folgenden PPD) bezeichnet wird, werden die erste und, falls vorhanden, weitere Zellen des Rahmens, die sich bereits in der Warteschlange befinden, nicht entfernt, sondern lediglich alle neu eintreffenden Zellen des Rahmens entfernt, mit Ausnahme der letzten Zelle des Rahmens. PPD hat den Nachteil, daß zumindest die erste und die letzte Zelle des Rahmens weiterhin in der Warteschlange verbleiben.

Warteschlangen werden üblicherweise nach dem FIFO-Prinzip organisiert, wonach die im Vergleich zu einer anderen Zelle zuerst an der Warteschlange eingetroffene Zelle die Warteschlange auch zuerst wieder verläßt. Unter Umständen werden die Zellen jedoch in zumindest zwei Prioritätsklassen eingeteilt, wobei Zellen höherer Priorität bevorzugt behandelt werden.

Aus IEEE 95 ist ein weiteres Verfahren bekannt, gemäß dem alle Zellen eines Rahmens, von der ersten bis zur letzten Zelle, beim Eintreffen an einer Warteschlange aus der ATM-Kommunikationseinrichtung entfernt werden. Dieses Early Packet Discard (im folgenden EPD) genannte Verfahren hat den Vorteil, daß keine Restzellen eines beschädigten oder aus anderen Gründen zu entfernenden Rahmens übrigbleiben und somit der maximal mögliche Platz für andere ATM-Zellen zur Verfügung steht. EPD ist jedoch nicht auf Rahmen anwendbar, deren erste Zelle bereits der Warteschlage hinzugefügt worden ist.

Aus D1 (=HONGQING LI ET AL: "PERFORMANCE OF TCP OVER UBR SERCVICE IN ATM NETWORKS WITH PER-VC EARLY PACKET DISCARD SCHEMES", PROCEEDINGS OF THE 1996 IEEE FIFTEENTH ANNUAL INTERNATIONAL PHOENIX CONFERENCE ON COMPUTERS AND COMMUNICAATIONS, SCOTTSDALE, 27.-29.März 1996, Nr. CONF. 15, 27. März 1996 (1996-03-27), Seiten 350-357, XP000594803, INSTITUTE OF ELECTRICAL AND ELECTRONICS ENGINEERS; ISBN: 0-7803-3256-3) ist ein Verfahren zum Entfernen von ATM-Zellen aus einer ATM Kommunikationseinrichtung bekannt.

Der vorliegenden Erfindung liegt die Aufgabe zugrunde, ein Verfahren zum Entfernen von ATM-Zellen aus einer ATM-Kommunikationseinrichtung, in der ATM-Zellen jeweils zu mehreren einem gemeinsamen Rahmen zugeordnet sind, anzugeben, bei dem in möglichst kurzer Zeit und in einer möglichst großen Vielzahl von Zuständen einer Warteschlange ATM-Zellen eines bestimmten Rahmens aus der ATM-Kommunikationseinrichtung entfernt werden können.

Die Aufgabe wird durch ein Verfahren mit den Merkmalen des Anspruchs 1 gelöst. Weiterbildungen sind Gegenstand der abhängigen Ansprüche.

Unter dem Begriff "Warteschlange" wird in dieser Beschreibung jede Verwaltungseinheit zum Verwalten einer Mehrzahl von ATM-Zellen verstanden, in der eine eindimensionale logische Verkettung der Mehrzahl von ATM-Zellen gebildet oder herstellbar ist. Insbesondere fallen hierunter Warteschlangen, die nach dem FIFO-Prinzip organisiert sind.

Bei dem erfindungsgemäßen Verfahren zum Entfernen von ATM-Zellen werden aus einer Warteschlange zum Verwalten einer Reihenfolge von ATM-Zellen, alle ATM-Zellen eines Rahmens entfernt, dessen erste ATM-Zelle sich in der Warteschlange befindet. Somit wird beim Entfernen der ATM-Zellen des Rahmens der größtmögliche Platz in der Warteschlange geschaffen. Darüber hinaus ist es möglich, alle ATM-Zellen des Rahmens gleichzeitig oder unmittelbar nacheinander aus der Warteschlange zu entfernen, so daß die Zellen in der kürzestmöglichen Zeit entfernt werden können. Insbesondere ist es nicht erforderlich, dabei auf das Eintreffen von ATM-Zellen an der Warteschlange zu warten. Das Verfahren kann außerdem bei einer Vielzahl von Zuständen der Warteschlange angewandt werden, nämlich immer dann, wenn die erste ATM-Zelle eines Rahmens sich in der Warteschlange befindet. Bei Weiterbildungen des Verfahrens kann die Anwendung des Verfahrens jedoch von der Erfüllung zusätzlicher Bedingungen abhängig gemacht werden.

Beispielsweise wenn die Warteschlange mittels einer Pointer-Kette realisiert wird, läßt sich das Löschen bzw. Entfernen der ATM-Zellen einfach durch Auftrennen der Pointer-Kette und durch Freigeben des entsprechenden Speicherplatzes in einem Datenspeicher realisieren. Wie bekannt ist, kann die Pointerkette mittels eines Computerprogramms oder mittels Hardware, insbesondere unter Nutzung der Information an definierten Stellen in Hardware-Datenspeicherbereichen zur Aufnahme von ATM-Zelleninformation, hergestellt und verwaltet werden.

Bei einer Weiterbildung des Verfahrens ist der Rahmen, dessen ATM-Zellen entfernt werden, der am weitesten hinten in der Warteschlange beginnende Rahmen. Bei dem Entfernen der ATM-Zellen des Rahmens wird insbesondere dessen erste ATM-Zelle festgestellt und wird diese ATM-Zelle sowie werden, falls vorhanden, alle in der Warteschlange befindlichen, nachgeordneten ATM-Zellen des Rahmens entfernt.

Vorzugsweise werden nachfolgende ATM-Zellen des Rahmens bei oder nach dem Eintreffen an der Warteschlange bis einschließlich der letzten ATM-Zelle des Rahmens entfernt. Somit wird verhindert, daß die später eintreffenden ATM-Zellen des Rahmens die ATM-Kommunikationseinrichtung unnötig belasten. Das Entfernen der nachfolgenden ATM-Zellen gleicht insofern dem Entfernen von ATM-Zellen gemäß EPD, als das Entfernen der einzelnen Zellen durch ihr Eintreffen an der Warteschlange ausgelöst wird.

Vorzugsweise wird ein Rahmen-Anfangskennwert gespeichert, der die der ersten ATM-Zelle des Rahmens unmittelbar vorgeordnete ATM-Zelle in der Warteschlange bezeichnet, und wird vor dem Entfernen der ATM-Zelle bzw. der ATM-Zellen des Rahmens der Rahmen-Anfangskennwert abgerufen. Diese Vorgehensweise hat den Vorteil, daß die üblicherweise bei ATM-Systemen vorhandene Information, welche Zelle die letzte Zelle eines Rahmens ist, genutzt werden kann. Diese Information ist üblicherweise im Zellenkopf der letzten Zelle des Rahmens vorhanden, nämlich in der Regel in dem sogenannten AAU-Bit in dem Zellentypfeld (payload type field) des Zellenkopfes.

Insbesondere wird das Vorhandensein dieser Information jeweils bei oder vor dem Hinzufügen einer neu eingetroffenen ATM-Zelle am Ende der Warteschlange geprüft. Gegebenenfalls wird dann ein Wert als der Rahmen-Anfangskennwert gespeichert, der diese ATM-Zelle bezeichnet, so daß die ATM-Zellen des zugehörigen Rahmens nicht aus der Warteschlange entfernt werden können, da zumindest in diesem Zustand der Warteschlange auf die gerade eingetroffene letzte ATM-Zelle des Rahmens keine erste ATM-Zelle eines nachgeordneten Rahmens in der Warteschlange vorhanden ist. Sobald eine solche erste ATM-Zelle eines nachgeordneten Rahmens eingetroffen ist, ist ein Entfernen von ATM-Zellen des nachgeordneten Rahmens möglich.

Die zuvor beschriebene Maßnahme dient insbesondere dem Schutz von einzelnen, keinem Rahmen zugeordneten ATM-Zellen, insbesondere von OAM(Operation, Administration, Maintenance)-Zellen oder RM(Resource Management)-Zellen bei einer Weiterbildung des Verfahrens. OAM-Zellen dienen im allgemeinen der Betriebsführung und Wartung, RM-Zellen der Flußsteuerung. Solche einzelnen Zellen sollen häufig nicht aus der ATM-Kommunikationseinrichtung entfernt werden. Vorzugsweise wird daher, wenn der ersten ATM-Zelle des Rahmens, der der einzige in der Warteschlange beginnende Rahmen oder der am weitesten hinten in der Warteschlange beginnende Rahmen ist, eine solche einzelne ATM-Zelle unmittelbar vorgeordnet ist, ein Wert als der Rahmen-Anfangskennwert gespeichert, der diese einzelne ATM-Zelle bezeichnet. Folglicherweise ist diese einzelne Zelle davor geschützt, entfernt zu werden, weil bei dieser Ausgestaltung des Verfahrens nur nachgeordnete Zellen in der Warteschlange entfernt werden können.

Wenn der ersten ATM-Zelle des Rahmens, der der am weitesten hinten in der Warteschlange beginnende Rahmen ist, eine letzte ATM-Zelle eines anderen Rahmens unmittelbar vorgeordnet ist, bezeichnet der Rahmen-Anfangskennwert vorzugsweise diese ATM-Zelle.

Eine weitere Möglichkeit des Schutzes von einzelnen, keinem Rahmen zugeordneten ATM-Zellen ist bei einer Weiterbildung realisiert. Bei dieser Weiterbildung wird anstelle des Anfangskennwerts ein vorgegebener Sperrwert gespeichert, wenn der ersten ATM-Zelle des Rahmens, dessen ATM-Zellen für ein Entfernen aus der Warteschlange in Frage kommen, eine solche einzelne ATM-Zelle nachgeordnet ist. Vorzugsweise wird der Sperrwert beim Eintreffen der einzelnen ATM-Zelle an der Warteschlange und/oder beim Hinzufügen dieser Zelle zu der Warteschlange gespeichert. Die Zelle ist somit unmittelbar nach ihrem Eintreffen bzw. Hinzufügen geschützt.

Die Erfindung wird nun anhand von Ausführungsbeispielen weiter beschrieben. Sie ist jedoch nicht auf diese Ausführungsbeispiele beschränkt. Die einzelnen Figuren der Zeichnung zeigen:
- Fig. 1: eine Warteschlange zum Verwalten einer Reihenfolge von ATM-Zellen und
- Fig. 2: den Vorgang des Entfernens von ATM-Zellen ausgehend von dem in Fig. 1 gezeigten Zustand einer Warteschlange.

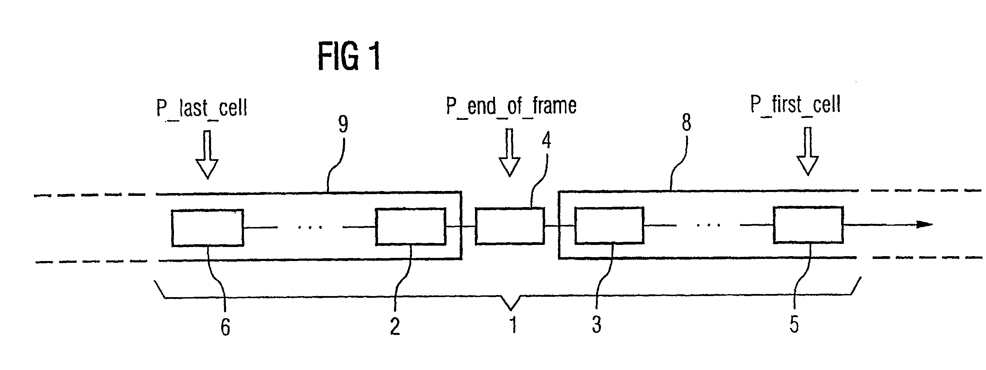

Fig. 1 zeigt eine Warteschlange 1, in der ATM-Zellen 2, 3, 4, 5, 6 in einer bestimmten Reihenfolge angeordnet sind. Die ATM-Zellen sind dabei teilweise zwei verschiedenen Rahmen 8, 9 zugeordnet, wobei weitere ATM-Zellen des Rahmens 8 die Warteschlange 1 bereits in Pfeilrichtung nach rechts verlassen haben und weitere ATM-Zellen des Rahmens 9 noch nicht (von links kommend) an der Warteschlange 1 eingetroffen sind. Die erste Warteschlangenzelle 5 ist daher nicht die erste Zelle des Rahmens 8. Die letzte Rahmenzelle 3 des Rahmens 8, die in ihrem Zellenkopf eine entsprechende Rahmenendkennung trägt, befindet sich in der Warteschlange 1. Dieser letzten Rahmenzelle 3 unmittelbar nachgeordnet ist eine OAM-Zelle, die eine einzelne, keinem Rahmen zugeordnete Zelle ist. Der OAM-Zelle 4 unmittelbar nachgeordnet ist die erste Rahmenzelle 2 des Rahmens 9. Weitere ATM-Zellen des Rahmens 9 folgen. Eine dieser ATM-Zellen ist die letzte Warteschlangenzelle 6 der Warteschlange 1.

Zum Markieren bestimmter Zellen 4, 5, 6 in der Warteschlange 1 werden, insbesondere mittels eines Computerprogramms zur Verwaltung der Zellen in der Warteschlange 1, Variablen, insbesondere Pointer, vorgesehen. Die Variable P_first_cell bezeichnet dabei die erste Warteschlangenzelle 5 der Warteschlange 1. Ist die Warteschlange 1 leer, so ist in der Variablen ein vorgegebener Wert gespeichert, im folgenden "invalid" genannt, der bedeutet, daß kein gültiger Eintrag vorhanden ist. In der Variablen P_end_of_frame ist ein Wert gespeichert, der die letzte ATM-Zelle bezeichnet, die eine letzte Rahmenzelle in der Warteschlange 1 ist. Folgt auf eine solche letzte Rahmenzelle, wie beispielsweise in Fig. 1 die ATM-Zelle 3, eine einzelne, keinem Rahmen zugeordnete Zelle, im Beispiel von Fig. 1 die OAM-Zelle 4, so wird in P_end_of_frame der Kennwert der letzten, d.h. am weitesten hinten in der Warteschlange 1 befindlichen einzelnen Zelle gespeichert. Im Beispiel von Fig. 1 ist nur eine solche Zelle vorhanden, so daß P_end_of_frame den Kennwert der OAM-Zelle 4 enthält.

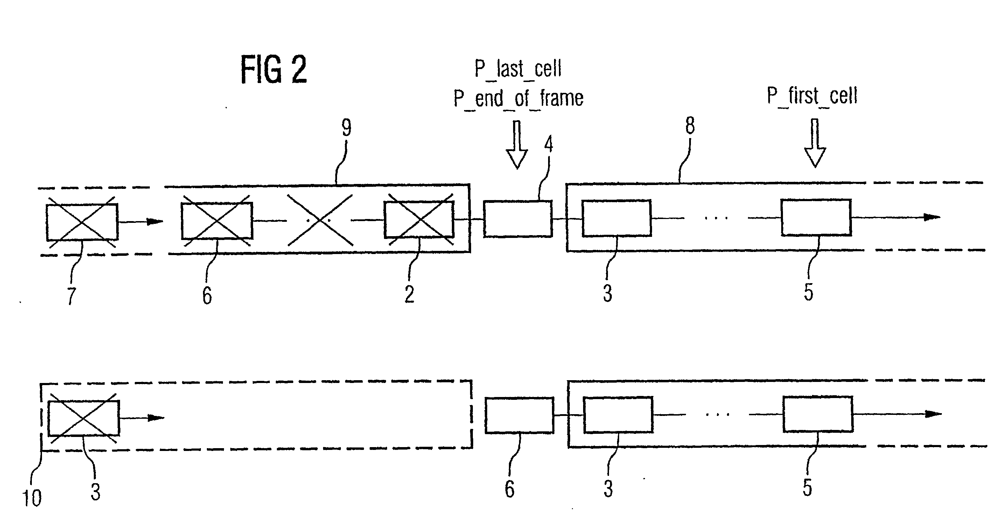

Soll nun Platz in dem ATM-System geschaffen werden, insbesondere für ATM-Zellen höherer Priorität, dann werden zunächst, wie in Fig. 2 gezeigt, alle Zellen des Rahmens 9, die sich bereits in der Warteschlange 1 befinden, aus der Warteschlange entfernt. Dazu wird vorzugsweise in der Variablen P_last_cell der Wert der Zelle eingetragen, der bereits in der Variablen P_end_of_frame eingetragen ist. Im Beispiel von Fig. 2 ist dies die OAM-Zelle 4. Weiterhin wird vorzugsweise in einer Variablen LPD_flag der Wert TRUE eingetragen, um eine Abfrage zu ermöglichen, ob die Prozedur des Entfernens von ATM-Zellen aktiviert ist. LPD ist die Abkürzung für Last Packet Discard, was bedeutet, daß der letzte Rahmen in der Warteschlange entfernt wird.

Nachfolgende ATM-Zellen 7 des Rahmens 9 werden dann bei oder nach dem Eintreffen an der Warteschlange 1 entfernt. Damit ist der im oberen Teil von Fig. 2 dargestellte Zustand erreicht. Die weiteren nachfolgenden ATM-Zellen des Rahmens 9 werden bis zum Rahmenende 10, d.h. bis zur letzten ATM-Zelle 3 des Rahmens 9 bei oder nach dem Eintreffen an der Warteschlange 1 entfernt. Damit ist der im unteren Teil von Fig. 2 dargestellte Zustand der Warteschlange 1 erreicht.

Im folgenden wird nun ein Ausführungsbeispiel der Erfindung anhand von Teilen eines Computerprogramms zum Verwalten einer Reihenfolge von ATM-Zellen in einer Warteschlange beschrieben. Solche Computerprogramme werden auch bei den bekannten Verfahren Early Packet Discard (EPD) und Partial Packet Discard (PPD) verwendet. Routinen des im folgenden beschriebenen Computerprogramms unterscheiden sich jedoch teilweise wesentlich von den bekannten Computerprogrammen.

Es werden folgende Annahmen getroffen: ATM-Zellen treffen an einer Warteschlange ein. Einige dieser Zellen sowie Zellen, die bereits in der Warteschlange eingereiht sind, sollen entfernt werden. Die verbleibenden Zellen verlassen die Warteschlange währenddessen oder später. Die ATM-Zellen sind zumindest teilweise in Rahmen organisiert, d.h. aufeinanderfolgende ATM-Zellen gehören von einer ersten Rahmenzelle bis zu einer letzten Rahmenzelle zu einem gemeinsamen Rahmen. Zwischen der ersten und der letzten Rahmenzelle befinden sich keine Rahmenzellen eines anderen Rahmens. Jedoch können zwischen der ersten Rahmenzelle und der letzten Rahmenzelle einzelne, keinem Rahmen zugeordnete ATM-Zellen eingereiht sein. Das zuvor Gesagte gilt sowohl für die Reihenfolge in einer Warteschlange als auch für die Reihenfolge der Übertragung auf einer Übertragungsstrecke einer ATM-Kommunikations-einrichtung. Die letzte ATM-Zelle jeweils eines Rahmens kann eindeutig identifiziert werden. Zur Verwaltung der ATM-Zellen in der Warteschlange wird eine eindeutige eindimensionale Verkettung der Zellen in der Warteschlange hergestellt. Damit ist die Reihenfolge eindeutig bestimmt. Für das Auffinden bestimmter Zellen in der Warteschlange würde es jedoch zu lange dauern, wenn jedesmal am Beginn oder Ende der Warteschlange mit der Suche begonnen würde und die Zellen in der Warteschlange Zelle für Zelle geprüft werden müßten. Daher können folgende Zellen durch Speichern einer Kennung in einer Variablen unmittelbar aufgefunden werden:
- die erste Zelle in der Warteschlange (Variable: P_first_cell)
- die letzte Zelle in der Warteschlange (Variable: P_last_cell)
- die letzte Zelle in der Warteschlange, die eine letzte Rahmenzelle ist oder die eine einzelne, keinem Rahmen zugeordnete Zelle ist, welche zwischen zwei Rahmen eingeordnet ist (Variable: P_end_of_frame)

Das Entfernen von ATM-Zellen nach dem Verfahren LPD wird nur ausgeführt, wenn die letzte Rahmenzelle der Warteschlange nicht die Zelle ist, deren Kennung in P_end_of_frame abgelegt ist und wenn in der Variablen P_end_of_frame ein gültiger Zellenkennwert eingetragen ist, d.h. wenn sich eine letzte Rahmenzelle oder eine darauf folgende einzelne Zelle noch in der Warteschlange befindet.

In einer ATM-Kommunikationseinrichtung können mehrere Warteschlangen vorhanden sein, die jeweils nach dem im folgenden beschriebenen Verfahren verwaltet werden. In diesem Fall hat jede Warteschlange eine eigene individuelle Kennung und sind Variablen zum Speichern der oben genannten Zellen für jede Warteschlange vorhanden. Der Einfachheit halber wird für die folgenden Programmteile angenommen, daß nur eine Warteschlange vorhanden ist.

Zunächst werden einzelne Operationen vorgestellt, die an den Zellen ausgeführt werden können. Es wird angenommen, daß jede der Zellen eine eindeutige Kennung besitzt, die mit P_cell bezeichnet wird. Die Operationen sind:
- *next_cell (P_cell)* gibt die Kennung der unmittelbar nachgeordneten Zelle in der Warteschlange zurück
- *end_of_frame (P_cell)* gibt den Wert TRUE zurück, wenn P_cell eine letzte Rahmenzelle bezeichnet, und gibt andernfalls den Wert FALSE zurück
- *exclude_cell (P_cell)* gibt den Wert TRUE für Zellen zurück, die nicht entfernt werden sollen, beispielsweise OAM-Zellen
- *discard_cell (P_cell)* entfernt die Zellen mit der Kennung P_cell
- *decide*_*cell (P_cell)* stellt anhand von hier nicht näher erläuterten Kriterien fest, ob an der Zelle mit Kennung P_cell bestimmte Operationen oder Prozeduren, insbesondere *discard_cell oder append_cell* (s.u.) ausgeführt werden sollen.

Die folgenden Prozeduren bzw. Funktionen (im folgenden Prozeduren genannt) werden näher erläutert:
- *arrive*_*cell (P_cell)* führt diverse Operationen an der Zelle mit der Kennung P_cell beim Eintreffen an der Warteschlange aus
- *queue_empty* gibt den Wert TRUE zurück, wenn die Warteschlange leer und gibt anderenfalls den Wert FALSE zurück
- *append_cell (P_cell)* fügt die Zelle mit der Kennung P_cell am Ende der Warteschlange an und führt diverse Operationen aus
- *extract_cell* dient dem Entnehmen einer Zelle am Anfang der Warteschlange, insbesondere zur Übertragung dieser Zelle auf einer Übertragungsstrecke
- *remove_last_frame* entfernt alle Zellen des letzten Rahmens der Warteschlange aus der Warteschlange, wenn möglich

Um eine Abfrage zu ermöglichen, ob das Entfernen von Zellen aus der ATM-Kommunikationseinrichtung gemäß dem Verfahren LPD aktiv ist, ist eine Boolsche Variable LPD_flag vorgesehen.

Bei der Initialisierung des Programms, d.h. wenn die Warteschlange leer ist, werden die drei Zellkennungs-Variablen P_first_cell, P_last_cell und P_end_of_frame auf den Wert invalid gesetzt und wird die Variable LPD_flag auf den Wert FALSE gesetzt.

An der Warteschlange können Zellen ankommen, die nicht gewöhnliche Datenzellen sind und nicht zu einem Rahmen gehören. Diese einzelnen Zellen, beispielsweise OAM-Zellen oder RM-Zellen, können vom Entfernen aus der ATM-Kommunikationseinrichtung ausgeschlossen oder nicht ausgeschlosen sein. Dafür stehen in dem ATM-Kommunikationssystem Kriterien zur Verfügung, die hier nicht näher erläutert werden. Wenn eine dieser Zellen, die nicht entfernt werden soll, zwischen einer ersten und einer letzten Rahmenzelle eingereiht ist, dann wird das Entfernen der Zellen des Rahmens nach dem Verfahren LPD nicht ausgeführt.

Prozedur *arrive_cell* arbeitet in dem Programmbeispiel nach folgendem Algorithmus:

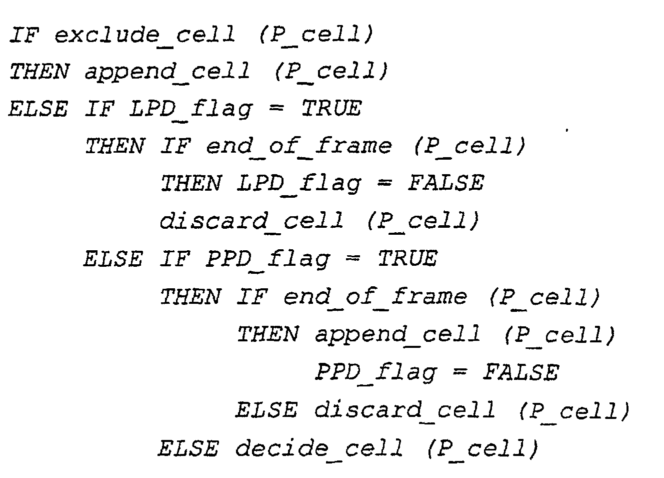

Bei der Prozedur *arrive_cell (P_cell)* wird zunächst geprüft, ob die eingetroffene Zelle in jedem Fall akzeptiert, d.h. am Ende der Warteschlange angefügt werden soll. Andernfalls wird geprüft, ob das Entfernen von Zellen nach dem Verfahren LPD aktiviert ist. Wenn ja, dann wird die Zelle entfernt und wird, wenn die Zelle die letzte Rahmenzelle ist, das Entfernen für nachfolgende Zellen abgeschaltet. Wenn LPD nicht aktiviert ist, dann wird geprüft, ob das aus dem Stand der Technik bekannte Verfahren PPD (Partial Packet Discard) aktiviert ist. PPD kann in bestimmten Fällen, wenn LPD nicht ausführbar ist, zu einer Entlastung des ATM-Systems führen. Bei PPD werden lediglich an der Warteschlange eintreffende Zellen entfernt und werden keine bereits in der Warteschlange befindliche Zellen entfernt. Wenn PPD aktiviert ist, dann wird die eingetroffene Zelle entfernt, falls sie keine letzte Rahmenzelle ist. Falls sie eine letzte Rahmenzelle ist, wird die Prozedur *append_cell (P_cell)* aufgerufen und anschließend PPD deaktiviert. Wenn PPD und LPD nicht aktiviert waren, wird die Prozedur *decide_cell (P_cell)* aufgerufen.

Prozedur *append_cell (P_cell)* arbeitet in dem Programmbeispiel nach folgendem Algorithmus:

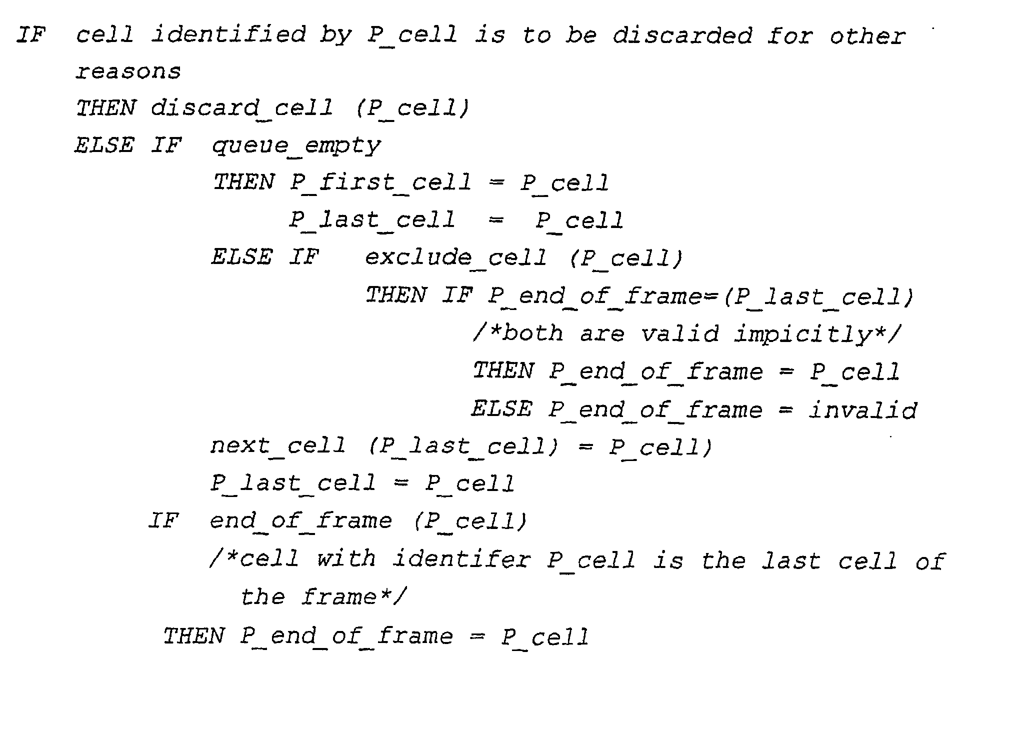

Bei der Prozedur *append_cell (P_cell)* wird zunächst geprüft, ob die Zelle mit der Kennung P_cell auf jeden Fall entfernt werden soll. Gegebenenfalls wird die Prozedur *discard_cell (P_cell)* aufgerufen. Andernfalls wird geprüft, ob die Warteschlange leer ist. Falls ja, wird in den Variablen P_first_cell und P_last_cell die Kennung der Zelle eingetragen. Falls die Warteschlange nicht leer war, wird geprüft, ob die Zelle in jedem Falle vor einem Entfernen geschützt werden soll, weil sie beispielsweise eine OAM-Zelle ist. Soll die Zelle in jedem Fall geschützt werden, wird in der Variablen P_end_of_frame entweder die Kennung der Zelle eingetragen (wenn bisher in der Variablen die Kennung einer letzten Rahmenzelle eingetragen war (oder wird der Wert invalid eingetragen andernfalls). Falls die Zelle mit der Kennung P_cell selbst eine letzte Rahmenzelle ist, wird ihre Kennung in der Variablen P_end_of_frame eingetragen. Um die Zelle an der Warteschlange anzufügen, wird unabhängig von dem bisherigen Zustand der Warteschlange und unabhängig von der Art der einzufügenden Zelle eine Pointer-Verbindung zu der angefügten Zelle hergestellt und wird in der Variablen P_last_cell die Kennung der Zelle eingetragen.

Prozedur *extract_cell* wird im Programmbeispiel durch folgenden Algorithmus beschrieben:

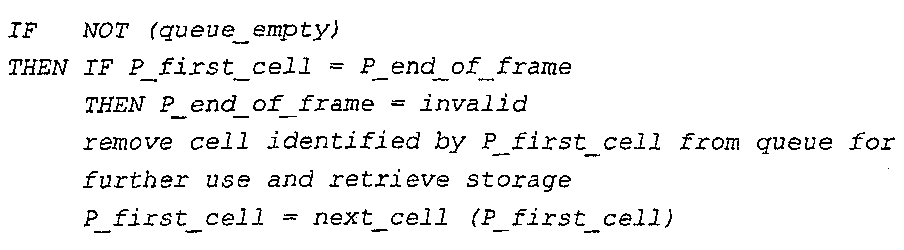

Gemäß Prozedur *extract_cell* wird, wenn die Warteschlange nicht leer ist, die erste Zelle der Warteschlange zur weiteren Bearbeitung, insbesondere Übertragung, aus der Warteschlange entnommen. Hierbei wird geprüft, ob es sich bei der ersten Zelle um eine letzte Rahmenzelle bzw. um eine in der Variablen P_end_of_frame eingetragene einzelne Zelle handelt. In diesem Fall wird in der Variablen P_end_of frame der Wert invalid eingetragen, da sich nach der Entnahme der ersten Zelle dann keine entsprechende Zelle mehr in der Warteschlange befindet. Insbesondere befindet sich dann keine letzte Rahmenzelle mehr in der Warteschlange. Ein Entfernen von Zellen aus der Warteschlange ist dann solange nicht möglich, bis wieder eine letzte Rahmenzelle und eine darauf folgende Rahmenzelle eines nachfolgenden Rahmens an die Warteschlange angefügt worden sind. Die erste Warteschlangenzelle wird entnommen und in der Variablen P_first_cell die Kennung der nächstfolgenden Zelle in der Warteschlange eingetragen.

Die Prozedur *remove_last_frame* wird in dem Programmbeispiel durch den folgenden Algorithmus beschrieben:

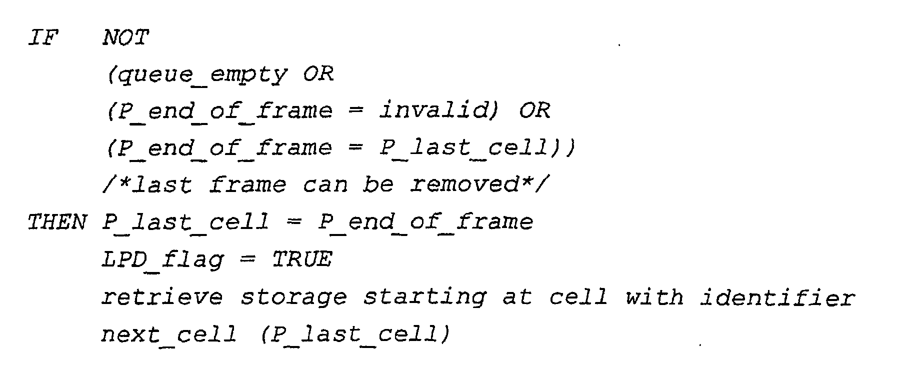

In der Prozedur werden zunächst drei Bedingungen abgefragt:
- ist die Warteschlange leer?
- ist in der Variablen P_end_of_frame der Wert invalid eingetragen?
- ist in der Variablen P_end_of_frame und in der Variablen P_last_cell dieselbe Kennung eingetragen?

Falls alle drei Fragen mit Nein beantwortet werden, werden alle Zellen des Rahmens, der der am weitesten hinten in der Warteschlange beginnende Rahmen ist, aus der Warteschlange entfernt. Dies wird auf einfache Weise dadurch erreicht, daß in der Variablen P_last_cell derselbe Wert eingetragen wird, der in der Variablen P_end_of_frame eingetragen ist. Damit steht in diesen beiden Variablen entweder der Wert einer letzten Rahmenzelle oder einer einer solchen Zelle nachgeordneten einzelnen Zelle. Weiterhin wird die Boolsche Variable LPD_flag auf den Wert TRUE gesetzt, um nachfolgende ATM-Zellen des Rahmens bei ihrem Eintreffen an der Warteschlange bis einschließlich der letzten ATM-Zelle des Rahmens zu entfernen. Der von den entfernten Zellen beanspruchte Speicherplatz wird freigegeben.

Abschließend werden nochmals die Vorteile des Verfahrens LPD zusammengefaßt:
- Es können vollständige Rahmen entfernt werden.
- Es wird schnellstmöglich Platz in einer Warteschlange geschaffen, indem alle bereits in der Warteschlange befindlichen Zellen eines Rahmens gleichzeitig oder unmittelbar nacheinander aus der Warteschlange entfernt werden.
- Die weiteren Zellen des Rahmens werden unmittelbar bei ihrem Eintreffen an der Warteschlange bis zur letzten Rahmenzelle entfernt.
- Das Entfernen der Zellen aus der Warteschlange ist unabhängig vom Eintreffen von Zellen am Ende der Warteschlange. Um diesen Vorteil zu erhalten, werden lediglich zwei zusätzliche Variablen benötigt, nämlich P_end_of_frame und LPD_flag. Je nach der Art des Verfahrens, an dessen Stelle LPD tritt, kann aber unter Umständen auch eine Variable eingespart werden. Beispielsweise ist eine Variable EPD_flag nicht erforderlich, die anzeigt, ob das Verfahren EPD (Early Packet Discard) aktiviert ist.
- Insbesondere einzelne Zellen, die keinesfalls aus der ATM-Kommunitationseinrichtung entfernt werden sollen, werden wirksam vor dem Entfernen geschützt.
- In dem beschriebenen Ausführungsbeispiel kommt ein Computerprogramm zum Verwalten einer Reihenfolge von ATM-Zellen einer Warteschlange mit einem Minimum an Operationen aus, wenn ATM-Zellen aus der Warteschlange entfernt werden. Es werden lediglich in zwei Variablen, nämlich P_last_cell und LPD_flag neue Werte eingetragen und der entsprechende Speicherplatz freigegeben. Das Freigeben des Speicherplatzes kann dabei insbesondere Schritt für Schritt ausgeführt werden, wenn freie Rechenzeit zur Verfügung steht. Das System steht damit in kürzester Zeit für weitere Zelloperationen zur Verfügung.

## Patentansprüche

1. Verfahren zum Entfernen von ATM-Zellen (2, 6) aus einer ATM-Kommunikationseinrichtung, in der ATM-Zellen (2, 3, 5, 6) jeweils zu mehreren einem gemeinsamen Rahmen (8, 9) zugeordnet sind, wobei aus einer Warteschlange (1) zum Verwalten einer Reihenfolge von ATM-Zellen (2, 3, 4, 5, 6), alle ATM-Zellen (2...6) eines Rahmens (9) entfernt werden, dessen erste ATM-Zelle (2) sich in der Warteschlange (1) befindet,
**dadurch gekennzeichnet,**
**daß** ein Rahmen-Anfangskennwert gespeichert wird, der die der ersten ATM-Zelle (2) des Rahmens (9) unmittelbar vorgeordnete ATM-Zelle (4) in der Warteschlange (1) bezeichnet, und daß vor dem Entfernen der ATM-Zelle (2) bzw. der ATM-Zellen (2,6) des Rahmens (9) der Rahmen-Anfangskennwert abgerufen wird.

2. Verfahren nach Anspruch 1,
**dadurch gekennzeichnet,**
**daß** der Rahmen (9) der am weitesten hinten in der Warteschlange (1) beginnende Rahmen ist:

3. Verfahren nach Anspruch 1 oder 2,
**dadurch gekennzeichnet,**
**daß** nachfolgende ATM-Zellen (3, 7) des Rahmens (9) bei oder nach dem Eintreffen an der Warteschlange (1) bis einschließlich der letzten ATM-Zelle (3) des Rahmens (9) entfernt werden.

4. Verfahren nach einem der verangehenden Ansprüche,
**dadurch gekennzeichnet,**
**daß**, wenn der ersten ATM-Zelle des Rahmens eine letzte ATM-Zelle eines anderen Rahmens unmittelbar vorgeordnet ist, der Rahmen-Anfangskennwert diese ATM-Zelle bezeichnet.

5. Verfahren nach einem der verangehenden Ansprüch
**dadurch gekennzeichnet,**
**daß**, wenn der ersten ATM-Zelle (2) des Rahmens (9) eine keinem Rahmen zugeordnete, einzelne ATM-Zelle (4), insbesondere eine OAM-Zelle oder eine RM-Zelle, unmittelbar vorgeordnet ist, der Rahmen-Anfangskennwert diese ATM-Zelle (4) bezeichnet.

6. Verfahren nach einem der Ansprüche 1 - 5,
**dadurch gekennzeichnet,**
**daß**, wenn der ersten ATM-Zelle des Rahmens eine keinem Rahmen zugeordnete einzelne ATM-Zelle, insbesondere eine OAM-Zelle oder eine RM-Zelle, in der Warteschlange nachgeordnet ist, anstelle des Rahmen-Anfangskennwertes ein vorgegebener Sperrwert gespeichert wird, so daß die ATM-Zellen des Rahmens nicht aus der Warteschlange entfernt werden können.

7. Verfahren nach Anspruch 6,
**dadurch gekennzeichnet,**
**daß** der Sperrwert beim Eintreffen der einzelnen ATM-Zelle an der Warteschlange und/oder beim Hinzufügen dieser Zelle zu der Warteschlange gespeichert wird.

8. Verfahren nach einem der Ansprüche 1 - 7,
**dadurch gekennzeichnet,**
**daß** bei oder vor dem Hinzufügen einer eingetroffenen ATM-Zelle am Ende der Warteschlange geprüft wird, ob es sich bei der ATM-Zelle um eine letzte Zelle eines Rahmens handelt, und daß gegebenenfalls ein Wert als der Rahmen-Anfangskennwert gespeichert wird, der diese ATM-Zelle bezeichnet, so daß die ATM-Zellen des zugehörigen Rahmens nicht aus der Warteschlange entfernt werden können.

## Claims

1. Method for removing ATM cells (2, 6) from an ATM communications device, in which a number of ATM cells (2, 3, 5, 6) are in each case associated with one common frame (8, 9), with all the ATM cells (2 ... 6) in a frame (9) whose first ATM cell (2) is located in a queue (1) being removed from that queue (1) for administration of a sequence of ATM cells (2, 3, 4, 5, 6), **characterized in that** a frame initial code value is stored, which denotes that ATM cell (4) which is arranged immediately in front of the first ATM cell (2) in the frame (9) in the queue (1), and **in that** the frame initial code value is called up before removing the ATM cell (2) or the ATM cells (2, 6) in the frame (9).

2. Method according to Claim 1,
**characterized in that** the frame (9) is that frame which starts furthest to the rear in the queue (1).

3. Method according to Claim 1 or 2, **characterized in that** subsequent ATM cells (3, 7) in the frame (9) are removed on or after arrival in the queue (1) up to and including the final ATM cell (3) in the frame (9).

4. Method according to one of the preceding claims, **characterized in that**, if the first ATM cell in the frame immediately follows a last ATM cell in another frame, the frame initial code value denotes this ATM cell.

5. Method according to one of the preceding claims, **characterized in that**, if the first ATM cell (2) in the frame (9) immediately follows an individual ATM cell (4) which is not associated with any frame, in particular an OAM cell or an RM cell, the frame initial code value denotes this ATM cell (4).

6. Method according to one of Claims 1 - 5, **characterized in that**, if the first ATM cell in the frame follows an individual ATM cell which is not associated with any frame, in particular an OAM cell or an RM cell, in the queue, a predetermined inhibit value is stored instead of the frame initial code value, so that the ATM cells **in that** frame cannot be removed from the queue.

7. Method according to Claim 6, **characterized in that** the inhibit value is stored when the individual ATM cell arrives in the queue, and/or when this cell is added to the queue.

8. Method according to one of Claims 1 - 7, **characterized in that** on or before addition of a relevant ATM cell to the end of the queue, a check is carried out to determine whether that ATM cell is the last cell in a frame and **in that** a value may be stored as the frame initial code value which denotes this ATM cell, so that the ATM cells in the associated frame cannot be removed from the queue.

## Revendications

1. Procédé destiné à supprimer des cellules ATM (2, 6) d'un dispositif de communication ATM, dans lequel des cellules ATM (2, 3, 5, 6) sont attribuées respectivement à plusieurs à un cadre commun (8, 9), toutes les cellules ATM (2...6) d'un cadre (9) étant supprimées d'une file d'attente (1) pour la gestion d'une séquence de cellules ATM (2, 3, 4, 5, 6) dont la première cellule ATM (2) se trouve dans la file d'attente (1), **caractérisé en ce qu'**un paramètre de début de cadre est mémorisé, qui caractérise la cellule ATM (4) directement placée avant la première cellule ATM (2) du cadre (9) dans la file d'attente (1), et **en ce que** le paramètre de début de cadre est prélevé avant la suppression de la cellule ATM (2) resp. des cellules ATM (2, 6) du cadre (9).

2. Procédé selon la revendication 1, **caractérisé en ce que** le cadre (9) est le cadre commençant le plus loin à l'arrière dans la file d'attente (1).

3. Procédé selon la revendication 1 ou 2, **caractérisé en ce que** les cellules ATM (3, 7) suivantes du cadre (9) sont supprimées pendant ou après l'arrivée dans la file d'attente (1) jusqu'à la dernière cellule ATM (3) du cadre (9) comprise.

4. Procédé selon l'une des revendications précédentes, **caractérisé en ce que**, lorsqu'une demière cellule ATM d'un autre cadre est placée directement avant la première cellule ATM du cadre, le paramètre de début de cadre caractérise cette cellule ATM.

5. Procédé selon l'une des revendications précédentes, **caractérisé en ce que**, lorsqu'une cellule ATM (4) isolée, notamment une cellule OAM ou une cellule RM, attribuée à aucun cadre, est placée directement avant la première cellule ATM (2) du cadre (9), le paramètre de début de cadre caractérise cette cellule ATM (4).

6. Procédé selon l'une des revendications 1 à 5, **caractérisé en ce que**, lorsqu'une cellule ATM isolée, notamment une cellule OAM ou une cellule RM, attribuée à aucun cadre, est placée directement après la première cellule ATM du cadre dans la file d'attente, une valeur de blocage prédéfinie est mémorisée à la place du paramètre de début de cadre, de sorte que les cellules ATM du cadre ne peuvent être supprimées de la file d'attente.

7. Procédé selon la revendication 6, **caractérisé en ce que** la valeur de blocage est mémorisée lors de l'arrivée d'une cellule ATM isolée dans la file d'attente et/ou lors de l'ajout de cette cellule dans la file d'attente.

8. Procédé selon l'une des revendications 1 à 7, **caractérisé en ce que**, pendant ou après l'ajout d'une cellule ATM arrivée, on vérifie à la fin de la file d'attente s'il s'agit dans le cas de la cellule ATM d'une dernière cellule d'un cadre et **en ce qu'**éventuellement une valeur est mémorisée comme paramètre de début de cadre, qui caractérise cette cellule ATM, de sorte que les cellules ATM du cadre correspondant ne peuvent pas être supprimées de la file d'attente.
